(19) **Europäisches Patentamt**
**European Patent Office**
**Office européen des brevets**

(11) **EP 1 890 559 B1**

(12) **EUROPEAN PATENT SPECIFICATION**

(45) Date of publication and mention
of the grant of the patent:
**31.03.2010 Bulletin 2010/13**

(51) Int Cl.:
*A23L 1/317* *(2006.01)*　　*A23L 1/315* *(2006.01)*
*A23L 1/308* *(2006.01)*　　*A23L 1/305* *(2006.01)*
*A23K 1/18* *(2006.01)*

(21) Application number: **06753609.4**

(22) Date of filing: **15.05.2006**

(86) International application number:
**PCT/EP2006/004538**

(87) International publication number:
**WO 2006/122734 (23.11.2006 Gazette 2006/47)**

(54) **CITRUS FRUIT FIBERS IN PROCESSED MEAT**

ZITRUSFRUCHT-BALLASTSTOFFE IN FLEISCHVERARBEITUNGSPRODUKTEN

FIBRES D'AGRUMES DANS UNE VIANDE TRANSFORMÉE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **18.05.2005 EP 05253044**

(43) Date of publication of application:
**27.02.2008 Bulletin 2008/09**

(73) Proprietor: **Cargill, Incorporated
Wayzata, MN 55391 (US)**

(72) Inventors:
• **VANHEMELRIJCK, Jozef, Guido, Roza
B-1860 Meise (BE)**

• **VAN DE SYPE, John
B-9890 Semmerzake (BE)**

(74) Representative: **Wilkinson, Stephen John
Stevens, Hewlett & Perkins
1 St. Augustine's Place
Bristol BS1 4UD (GB)**

(56) References cited:
**EP-A- 1 527 701　　WO-A-2004/045301
US-A- 4 225 628　　US-A- 4 865 863
US-A- 6 039 952　　US-A1- 2001 033 856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The current invention relates to a composition of citrus fruit fibers and soy protein, and its use in processed meat.

Background of the invention

Food manufacturers are continuously challenged to find ways to present an appetizing and authentic food product at minimized raw material costs. One area of particular endeavor has been the goal of producing attractive meat-based products.

It is well known that meat-analogues can be prepared from meat by-products such as liver, lungs and other trims with binders.

WO 2004/045301 relates to a proteinaceous meat analogue that is particularly useful in packaged pet foods. This meat analogue contains from 40 to 95-wt % edible proteinaceous material extracted from meat of bovine or of ovine, then a predetermined mixture of inter alia soy flour, soy meal, and soy concentrate is added. This mix of proteins is highly functional as it contains protein extract and soy concentrate.

Indeed, soy protein concentrates contain at least 65-wt % of protein. The use of such kind of concentrate is necessary in order to obtain a suitable texture.

US 6,039,952 pertains to a pet food composition comprising crude proteins and dietary fibers. Here also the process involves crude proteins, especially soy protein isolate which are interesting on a nutritional point of view and texturizing point of view. Indeed, these isolates contain at least 90-wt % of proteins and thus are highly functional.

US 2001/0033856 aims at a food composition in flour form comprising at least 50-wt % of protein and 35 to 50-wt % of plant fibers. This composition is used as a substitute for wheat flour in the preparation of foods such as pasta, bread, bread sticks or bakery product. The proteins used in this composition are inter alia soya proteins obtained from soya bean protein (soy protein isolates).

Document US 4 865 863 discloses fiber/sugar/flan minutes used in the preparation of meal puffies.

As it is apparent from the art, some attempts have been made to prepare meat analogue by using soy proteins. Nevertheless, the known processes always involve highly functional soya fraction. Indeed, the more the fraction used is concentrated in proteins, the more it will be functional in terms of texturizing properties, water binding properties, and emulsifying properties. These properties are necessary to produce a product without fat separation or syneresis. The drawback of such material is the cost because the proteins are the expensive part of the soy mixtures.

Thus, there is currently still a need for obtaining processed meat prepared from protein having an inferior functionality.

The current invention provides such a product and process for preparing it.

Summary of the invention

The current invention relates to a composition comprising dried citrus fruit fiber and soy protein flour. The citrus fruit fiber is having a total dietary fiber content of from 60 to 85-wt % and a water binding capacity of from 7 to 25 (w/w). In one embodiment, dried citrus fiber has a total dietary fiber content of from 60 to 80-wt% and a water binding capacity of from 7 to 12 (w/w).

In a preferred embodiment, the invention is a dry composition.

Furthermore the citrus fruit fiber is obtainable from citrus fruit selected from the group consisting of oranges, tangerines, limes, lemons and grapefruit.

The dry weight ratio of the dried citrus fruit fiber to protein is from 1:99 to 99:1, preferably from 5:95 to 90:10, more preferably from 10:90 to 30:70.

The composition can optionally further comprise hydrocolloids.

The current invention relates also to a liquid composition comprising the dry composition of the current invention and an edible liquid. The edible liquid is water, water-based liquid, water-miscible liquids and/or mixtures thereof.

Furthermore the invention relates to a meat emulsion comprising the dry composition according to the current invention, fat and water in a weight ratio up to 1:7:7, preferably from 1:4:4 to 1:7:7, more preferably 1:5:5 of dry composition: fat: water.

The current invention relates to the use of dried citrus fruit fiber to increase functionality of soy protein flour. Finally, said functionality is increased in processed meat.

The current invention relates to processed meat comprising edible ingredients and a composition or a meat emulsion according to the current invention.

Furthermore it relates to a process for preparing processed meat and said process comprises the following steps:

a) adding to meat the dry composition according to current invention to water, or taking liquid composition of current invention,

b) adding fat,

c) optionally adding salt,

d) optionally adding further edible ingredients,

e) mixing,

f) optionally casing the processed meat.

Detailed description

The current invention relates to a composition comprising dried citrus fruit fiber and soy protein flour. Citrus fiber is a valuable component, which has relatively high total dietary fiber content and a balanced ratio of soluble to insoluble dietary fiber. For example, the total dietary fiber preferably is made up of about 45-50% soluble dietary fiber and from 50-55% insoluble dietary fiber.

The balanced dietary fiber spectrum insoluble (structural) and soluble (chiefly pectin) fiber is advantageous in physiological functionality over cereal-based fibers. Citrus fiber of the present invention, particularly orange fiber, has an extremely high water binding capacity, resulting in high viscosities compared to Vitacel™ orange fiber (available from Rettenmaier). Dried citrus fiber has a total dietary content of from about 60 to about 85-wt% (based on dry substance) and a water binding capacity of from 7 to about 25 (w/w). Preferably the total dietary fiber content is at least about 70-wt% and the water binding capacity is at least about 8 (w/w).

The citrus fiber is extracted from citrus vesicles from a wide variety of citrus fruits, non-limiting examples of which include oranges, tangerines, limes, lemons and grapefruit.

Citrus vesicles refer to the cellulosic material contained in the inner, juice-containing portion of citrus fruit. Citrus vesicles are sometimes also referred to as coarse pulp, floaters, citrus cells, floating pulp or pulp.

In contrast, citrus flour obtained from citrus peel is characterized by an orange peel taste and odor, and a dark orange color, which is severely limiting the product's uses. Additional advantages of citrus fiber versus citrus flour are a higher total dietary fiber content (e.g., about 72-wt% versus 58-wt%); lower carbohydrate content (e.g., about 5-wt% versus 15-wt%); and higher water binding (e.g., greater than about 8.5 grams of water per gram of fiber versus 5.5 g/g). The protein content of the citrus fiber typically ranges from about 8 to 12wy-%.

The ratio soluble to insoluble dietary fiber is an important factor in the citrus fiber's functionality. Other important considerations include the degree of milling (granulometry) and drying conditions (process of drying). Generally, a higher degree of milling (i.e., a finer fiber granulometry) results in more smoothness of the fiber in the solution, as well as reduced water absorption capacity and reduced oil binding capacity compared to coarse fibers. Preferably dried citrus fruit fiber is obtainable according to the process disclosed in the pending WO patent application 2006/033697.

The current invention relates to a composition wherein the soy protein is soy protein flour.

Soy protein flour, including grits, is made by grinding and screening soybean flakes either before or after removal of the oil. Its protein content is in the range of 37 to 54-wt%.

Soy flours and grits are the least refined forms of soy protein products used for human consumption and may vary in fat content, particle size, and degree of heat treatment. They are also produced in lecithinated or defatted forms. The degree of heat treatment creates varying levels of water dispersibility and enzyme activity qualities that can be useful in tailoring functionality in many food applications.

The soy protein flour according to the invention contains up to 54-wt % of protein, preferably from 37 to 54 wt-%.

When defatted soy protein flour is used, the content of proteins.is preferably between 49 and 54-wt%; when full-fat soy flour is used, the protein content is preferably from 37 to 42wt-%, otherwise, it contains preferably from 42 to 49-wt % of protein.

If necessary, the soy protein flour can optionally be mixed with another source of protein in order to increase the protein content in the application.

Soy protein flour has a limited functionality in terms of emulsifying ability and water-binding property. However blending the soy protein flour with dried citrus fruit fiber, in particular the dried citrus fruit fiber obtainable according to the process from the application WO2006/033697, improves its functionality and particularly its emulsifying ability and/or water binding capacity in order to avoid fat and/or jelly separation when used in the manufacture of processed meat for example.

In another embodiment, the, composition further comprises hydrocolloids. Examples of hydrocolloids include carrageenan, xanthan, guar, locust bean, alginates, carboxymethylcellulose, carob bean gum, starch derivatives (native and/or modified starches, maltodextrins, and the like), where present, the amount of hydrocolloids is up to 30% w/w on the dry composition.

Conventionally, starch hydrolysates with DE up to 20 are termed maltodextrins.

The current invention further discloses liquid composition comprising the dry compositions of the current invention and an edible liquid. The edible liquid can be selected from water, water-based liquids such as milk, water-miscible liquids such as lower alcohols like ethanol and/or mixtures thereof.

Furthermore the current invention relates to a meat emulsion comprising the dry composition according to current invention, fat and water in a weight ratio up to 1:7:7, preferably from 1:4:4 to 1:7:7, more preferably 1:5:5 dry composition: fat: water.

All the weight ratios up to 1:7:7 (dry composition: fat: water) wherein the dry composition is preferably comprising soy protein flour are resulting in suitable meat emulsions. Weight ratios such as 1:1:1, 1:2:2, 1:3:3, 1:4:4, 1:5:5, 1:6:6 and 1:7:7 of dry composition: fat: water are all part of the current invention.

Meat emulsion systems are often used in the meat industry to predict performance of proteins or other functional ingredients in processed meats such as sausages, pâté and the like.

The meat emulsions are prepared as follows: after adding the dry composition of the current invention to the water, the suspension is chopped until smooth and shiny appearance in e.g. a bowl cutter.

After adding the fat, the complete mixture is emulsified and optionally some salt is added followed by increasing the temperature.

These model emulsions are evaluates for fat/jelly separation (visual) and hardness (Texture analysis by TPA penetration with small ebonite plunger of 314 mm$^2$ area for 20 mm penetration distance into the emulsified product. Test temperature is refrigerator temperature). Ideally, the pasteurized or sterilized model emulsion product should show no jelly and/or fat separation, and as high firmness as possible.

The current invention relates to processed meat comprising edible ingredients and a composition or a meat emulsion according to the current invention.

Processed meat is including for example emulsified cooked meat products and grounded meat products. It may include half-processed meat, ham, bacon, sausage, corned beef, dried meat, meat dumpling, hamburger, meatballs, raw shao-mai, daily household dishes and the like.

Ham further includes roasted meat, preserved chicken and fresh ham. The sausage can be smoked or dried. Further subdivision of hamburger and/or meatballs can be made according to the content of meat, being more or less than 50% of meat content. The food items referred to as daily household dishes, regardless of actual meat content, include pork cutlets, Japanese soup broth, shao-mai, croquette and wontons.

Edible ingredients of processed meat are meat-based products, and additives.

Typical additives for processed meat are nitrite-salts, phosphates, pepper, inacis, gember, Cardemom, ascorbic acid, mono sodium glutamate and the like.

The current invention has demonstrated that by applying the composition of the current invention in processed meat the fat and the jelly separation are significantly reduced (and or none existing) and the firmness is increased. By applying the composition of the current invention in the preparation of hamburger there is no shrinking observed and the yield is the same. Furthermore the dry composition has a high water-holding capacity even with a low content of meat.

Sausage comprising the composition of the current invention can be cased in permeable or impermeable casings.

The composition of the current invention is suitable for the use in processed meat.

Furthermore it relates to a process for preparing processed meat and said process comprises the following steps:

> a) adding to meat the dry composition according to current invention to water, or taking liquid composition of current invention,
> b) adding fat,
> c) optionally adding salt,
> d) optionally adding further edible ingredients,
> e) mixing,
> f) optionally casing the processed meat.

The current invention demonstrates the following advantages:

- Compositions of citrus fruit fiber and soy protein can be prepared in any ratio.
- The citrus fruit fiber improves the functionality of soy protein flour in terms of emulsifying properties and/or water binding capacity.
- Protein of lower quality, such as soy protein flour can be used in processed meat and no jelly/fat separation is observed and meat products of good quality are obtained.
- The dry composition of the current invention can be used in any weight ratio with fat and water to study the jelly fat separation in meat emulsions.

The invention is further defined by reference to the following examples describing in detail the preparation of the composition of the present invention. The invention described and claimed herein is not to be limited in scope by the specific • embodiments herein disclosed, since these embodiments are intended as illustrations of several aspects of the invention.

## Examples

The citrus fruit fibers used in the following examples were Orange Pulp Fibers (OPF) obtained by the process disclosed in WO 2006/033697. The orange pulp fibers from examples 1 to 3 have a water binding capacity of from 7 to 12.

## Example 1

Meat emulsion

1/4/4 emulsions were based on 1 part dry composition/ 4 parts of fat and 4 parts of water. 1/5/5 emulsions were based upon 1 part dry composition/ 5 parts of fat and 5 parts of water. The following compositions of the current invention were used as dry composition in the emulsion:

   10% coarse orange fiber (+ 90% defatted soy flour (10 mesh -80 PDI from Cargill)
   20% coarse orange fiber (+ 80% defatted soy flour (10 mesh -80 PDI from Cargill)
   30% coarse orange fiber (+ 70% defatted soy flour (10 mesh -80 PDI from Cargill)

Coarse orange fiber granulometry: average particle size of 500 microns as measured with Sympatec Laser PSD Instrument.
PDI = protein dispersibility index
The emulsion was formed as follows:

   350 grams of dry composition was added onto a water/ice cubes blend (700 grams water/ 700 grams of ice) and mixed for 3 minutes at speed 1 (slow speed) in a Stephan electronic 2010 UM01 lab cutter. Back fat (1400 grams) was added and cuttered for 2 minutes at speed 2. Salt (47.25 gram) was added and the cutter procedure at speed 2 was continued until 17°C was reached. 5 cans were filled with the model emulsion product.

Cutter procedure was then further continued until 24°C and again 5 cans were filled.
All can were closed.
A part of the cans was then pasteurized in water bath at 80°C until core temperature of 72°C was reached.
Another part of the cans was sterilized for 20 minutes at 121 °C in a lab sterilizer unit.
After the respective heat treatments, the cans were cooled down as fast as possible into cold ice water and stored at 4°C.
The obtained results are displayed in Table 1.

Table 1

| Dry composition | Emulsion type | Jelly separation | Hardness TAXT2 Plus (grams) |
|---|---|---|---|
| SF 200-70 90% OPF 10% | **1P 4W 4F (past.)** | None | 457 |
| SF 200-70 80% OPF 20% | **1P 4W 4F (past.)** | None | 714 |
| SF 200-70 70% OPF 30% | **1P 5W 5F** | None | 367 |
| SF 200-70 80% OPF 15% 5% Carrageenan K200 | **1P 5W 5F** | None | 1150 |
| SF 200 -70 = defatted Soy flour (Cargill) (200 mesh - 70 PDI (protein dispersibility index) OPF= orange fiber (Cargill) SF 200-70 90% OPF 10% = 90% (w/w) of defatted soy flour 200 mesh - 70 PDI) and 10% (w/w) orange fiber (Cargill) 1P 4W 4F= 1 part dry composition / 4 parts water / 4 parts fat 1P 5W 5F= 1 part dry composition / 5 parts water / 5 parts fat | | | |

The jelly separation was based upon visual observation.
The hardness was measured with Texture analyzer (Texture analysis by TPA penetration with small ebonite plunger of 314 $mm^2$ area for 20 mm penetration distance and at penetration test speed of 1mm/second into the emulsified product. Test temperature is refrigerator temperature).

Fat and jelly separations were reduced and firmness of the resulting 1/4/4 meat emulsion system was increased.

## Example 2

The following recipes were applied:

Table 2: Beef burger

| Beefburger | Reference | C 1 | C 2 |
|---|---|---|---|
| **Beef** | 98.50% | 80% | 70% |
| **Spices** | 1.50% | 1.50% | 1.50% |
| **Prosanté hydrated (texturised defatted soy protein flour (Cargill)** | | 10% | 15% |
| **Coarse OPF Fiber (Cargill) (granulometry: average particle size 500 microns)** | | 0.76% | |
| **Fine OPF Fiber (Cargill) (granulometry: average particle size 100 microns)** | | | 1.21% |
| **Water** | | 7.74% | 12.29% |
| **Total** | 100.00% | 100% | 100% |

The beefburgers were prepared as follows:

Grinded beef meat, soy protein flour and orange fiber were blended with water in Hobart mixer Type N50CE at speed 1 and after 30" spices were added.

After 2.5 min. the mass was turned manually; the mass was further blended for total time of 5 minutes.
The blend was put in refrigerator for 2 hours.
The burgers of 90 grams were formed using a cylindrical burger former device KD1 with inner diameter of 83 mm. After forming, the burgers were then fried fresh until 74-75°C core temperature.
The quality of the products was determined by the following parameters:

- Measurements of dimensions before and after frying: shrinkage
- Measurement of cooking loss (weight before and after frying)
- Taste, texture and juiciness, aspect and color
- 

$$Yield = 100\% - \left\{ \frac{(weight\ start - weight\ after\ baking)}{(weight\ start)} \right\} * 100$$

weight start = weight of burger before baking
Shrink = diameter before baking minus diameter after baking.
The following observations were made:

Table 3

| Beefburger | Reference | C 1 | C 2 |
|---|---|---|---|
| **Before Baking** | | | |
| **Diameter (mm)** | 80 | 80 | 80 |
| **Height (mm)** | 20 | 20 | 20 |

(continued)

| After Baking | | | |
|---|---|---|---|
| Diameter (mm) | 65 | 65 | 65 |
| Height (mm) | 20 | 20 | 17 |
| Shrink (mm) | 15 | 15 | 15 |
| Yield % | 83 | 81 | 83 |
| | | | |
| Beef % | 98.5 | 80 | 70 |
| water % | 0 | 15 | 23 |

There is no difference in shrink between the reference and the products of the current invention. Also the yield is the same between the reference and the products of the current invention.

**Example 3**

Table 4: Sausage

| Sausage | Reference | C1 |
|---|---|---|
| Pork Meat Sl (20% fat) | 40% | 27% |
| Pork fat (55% fat) | 30% | 31% |
| Backfat (90% fat) | 10% | 0% |
| Ice | 20% | 38% |
| Fine OPF Fiber Cargill) | | 1.20% |
| Soy flour 70 PDI (Cargill) | | 2.80% |
| | 100% | 100% |

- Pork meat Sl = (20%fat -17% protein - 63% water)
- Pork fat = (55%fat -10% protein - 35% water)
- Back fat = (90%fat - 2% protein - 8% water)

Fine OPF Fiber (Cargill) (granulometry: average particle size 100 microns
On 10 kg meat basis the following additives were added:

- 200 grams Nitrite salt
- 30 grams Phosphate
- 37 grams Spice blend
- 10 gram MSG (mono sodium glutamate)
- 10 gram ascorbic acid

The sausages were prepared as follows:

First Cutter (slow speed):

- Add pork meat
- Add salt and phosphate
- 1/3 of ice and spices
- the total was cuttered to 6 °C followed by cuttering at high speed.

- Add orange fiber and soy protein flour + 1/3 ice
- Add back fat and cutter to 12°C
- Add 1/3 of ice + ascorbic acid

- Cutter to 14°C

The end-products were stuffed into casings using Stephan continuous vacuum filler
-3 sausages into sterile, non-permeable casing (diameter 6 cm)
-3 sausages into permeable natural sheep casing (diameter 6 cm)
The cased meat was cooked in water at 75-80°C until core temperature sausage of was 72°C
Finally after cooking the sausages were cooled in ice water.
The products were analyzed visually for color and fat/jelly separation and further by Texture Analysis (TAXT2 Plus):

- Cutting test (blade knife test)

A cutting blade (10 cm long sharp cutting edge width 7 cm) was mounted on the moving upper part of the texture analyzer. A 28 mm thick slice of sausage (diameter 6 cm) was cut with the cutting blade and the maximum cutting.force (grams) was recorded.
Finally the cooking loss (only on sausages stuffed into permeable casings) was determined by weighting the sausage before and after the cooking process. For yield, the same formula as shown in the beef burger example was used.

**Table 5**

| After cooking | Reference | C 1 |
|---|---|---|
| **Permeable casings** | | |
| **Fat Jolly separation** | **none** | **none** |
| **Hardness (cutting test TAXT2)** | **2200** | **1800** |
| **Yield %** | **94** | **95** |
| **After cooking** | | |
| **Non-Permeable casings** | | |
| **Fat Jelly separation** | **none** | **none** |
| **Hardness (cutting test TAXT2)** | **1980** | **1725** |
| **Taste/mouthfeel** | **Standard** | **Standard** |

## Example 4

The water binding capacity of the citrus fibers suitable to be used according to the invention was measured. 3 samples were ground at different granulometry (40 $\mu$m, 75$\mu$m, and, 250$\mu$m) and then weighted with a precision balance Sartorius CP 3245. Each sample was prepared in double and an average was made to give the final result.
The procedure was as follow:

- In a 50ml centrifuge tube, 0.5 g of the fiber (dry powder) was weighted (W1),
- 40 g milli-Q water was added. The weight of the water was noted (W2),
- The tube was closed and stirred during 1 min by hand,
- The tube was then submitted to a centrifugation during 5 min at 2000 rpm with the centrifuge Labofuge 400 Heraeus,
- The supernatant was decanted and weighted (W3).

The water binding capacity (WBC) is expressed as g water/ g sample:

$$WBC = (W2 - W3) / W1$$

Table 6

| SAMPLES | WATER BINDNG CAPACITY g water / g product |
|---|---|
| OPF 40 $\mu$m | 19.01 |

(continued)

| SAMPLES | WATER BINDNG CAPACITY g water / g product |
|---|---|
| OPF 75μm | 19.19 |
| OPF 250μm | 24.14 |

**Claims**

1.  A composition comprising dried citrus fruit fiber and soy protein flour **characterized in that** the citrus fruit fiber is having a total dietary fiber content of from 60 to 85-wt% and a water binding capacity of from 7 to 25 (w/w).

2.  A composition according to claim 1 wherein said composition is dry.

3.  A composition according to claim 1 or claim 2 **characterized in that** the citrus fruit fiber is having a total dietary fiber content of from 60 to 80-wt% and a water binding capacity of from 7 to 12 (w/w).

4.  A composition according to the preceding claims **characterized in that** the citrus fruit fiber is obtainable from citrus fruit selected from the group consisting of oranges, tangerines, limes, lemons and grapefruit.

5.  A composition according to the preceding claims **characterized in that** the weight ratio of dried citrus fruit fiber to protein is from 1:99 to 99:1, preferably from 5:95 to 90:10, more preferably from 10:90 to 30:70.

6.  A composition according to the preceding claims **characterized in that** the composition further comprises hydrocolloids.

7.  A liquid composition comprising a dry composition according to any one of claims 2 to 6 and an edible liquid.

8.  A liquid composition according to claim 7 **characterized in that** the edible liquid is water, water-based liquids, water miscible liquids and/or mixtures thereof.

9.  A meat emulsion comprising dry composition according to any one of claims 2 to 6, fat and water in a weight ratio up to 1:7:7, preferably from 1:4:4 to 1:7:7, more preferably 1:5:5 dry composition: fat: water.

10. Use of citrus fruit fiber to increase functionality of soy protein flour in terms of emulsifying properties and/or water-binding capacity.

11. Use according to claim 10, wherein the citrus fruit fiber is dried.

12. Use according to claim 10 or 11 **characterized in that** said functionality is increased in processed meat.

13. Processed meat comprising edible ingredients and a composition according to any one of claims 2 to 6, or a meat emulsion according to claim 9.

14. A process for preparing processed meat and said process comprises the following steps:

    a) adding to meat the dry composition according to any one of claims 2 to 6 to water, or taking liquid composition of claim 7 or 8,
    b) adding fat,
    c) optionally adding salt,
    d) optionally adding further edible ingredients,
    e) mixing,
    f) optionally casing the processed meat.

## EP 1 890 559 B1

**Patentansprüche**

1. Zusammensetzung, umfassend getrocknete Zitrusfruchtfaser und Sojaproteinpulver, **dadurch gekennzeichnet, dass** die Zitrusfruchtfaser einen Gesamt-Ballaststoffgehalt von 60 bis 85 Gew.-% und ein Wasserbindungsvermögen von 7 bis 25 (Gew./Gew.) aufweist.

2. Zusammensetzung nach Anspruch 1, wobei die Zusammensetzung trocken ist.

3. Zusammensetzung nach Anspruch 1 oder Anspruch 2, **dadurch gekennzeichnet, dass** die Zitrusfruchtfaser einen Gesamt-Ballaststoffgehalt von 60 bis 80 Gew.-% und ein Wasserbindungsvermögen von 7 bis 12 (Gew./Gew.) aufweist.

4. Zusammensetzung nach den vorstehenden Ansprüchen, **dadurch gekennzeichnet, dass** die Zitrusfruchtfaser aus einer Zitrusfrucht, ausgewählt aus der Gruppe, bestehend aus Orangen, Mandarinen, Limonen, Zitronen und Grapefruit, ausgewählt ist.

5. Zusammensetzung nach den vorstehenden Ansprüchen, **dadurch gekennzeichnet, dass** das Gewichtsverhältnis von getrockneter Zitrusfruchtfaser zu Protein 1 : 99 bis 99 : 1, bevorzugt 5 : 95 bis 90 : 10, stärker bevorzugt 10 : 90 bis 30 : 70 beträgt.

6. Zusammensetzung nach den vorstehenden Ansprüchen, **dadurch gekennzeichnet, dass** die Zusammensetzung ferner Hydrokolloide umfasst.

7. Flüssige Zusammensetzung, umfassend eine trockene Zusammensetzung nach einem der Ansprüche 2 bis 6 und eine essbare Flüssigkeit.

8. Flüssige Zusammensetzung nach Anspruch 7, **dadurch gekennzeichnet, dass** die essbare Flüssigkeit Wasser, Wasser-basierende Flüssigkeiten, mit Wasser mischbare Flüssigkeiten und/oder Gemische davon ist.

9. Fleischemulsion, umfassend die trockene Zusammensetzung nach einem der Ansprüche 2 bis 6, Fett und Wasser in einem Gewichtsverhältnis von bis zu 1 : 7 : 7, bevorzugt 1 : 4 : 4 bis 1 : 7 : 7, stärker bevorzugt 1 : 5 : 5 trockene Zusammensetzung : Fett : Wasser.

10. Verwendung der Zitrusfruchtfaser zur Erhöhung der Funktionalität von Sojaproteinpulver im Hinblick auf die Emulgiereigenschaften und/oder das Wasserbindungsvermögen.

11. Verwendung nach Anspruch 10, wobei die Zitrusfruchtfaser getrocknet ist.

12. Verwendung nach Anspruch 10 oder 11, **dadurch gekennzeichnet, dass** die Funktionalität von Fleischprodukten erhöht wird.

13. Fleischprodukt, umfassend essbare Inhaltsstoffe und eine Zusammensetzung nach einem der Ansprüche 2 bis 6 oder eine Fleischemulsion nach Anspruch 9.

14. Verfahren zur Herstellung eines Fleischproduktes, wobei das Verfahren die folgenden Schritte umfasst:

   a) Zugabe der trockenen Zusammensetzung nach einem der Ansprüche 2 bis 6 und Wasser oder der flüssigen Zusammensetzung nach Anspruch 7 oder 8 zu Fleisch;
   b) Zugabe von Fett;
   c) gegebenenfalls Zugabe von Salz;
   d) gegebenenfalls Zugabe weiterer essbarer Inhaltsstoffe;
   e) Mischen;
   f) gegebenenfalls Verpacken des Fleischproduktes.

**Revendications**

1. Composition comprenant des fibres d'agrumes séchées et de la farine de protéines de soja, **caractérisée en ce**

**que** les fibres d'agrumes ont une teneur totale en fibres alimentaires de 60 à 85 % en poids et une capacité de liaison de l'eau de 7 à 25 (p/p).

2. Composition selon la revendication 1, ladite composition étant sèche.

3. Composition selon la revendication 1 ou la revendication 2, **caractérisée en ce que** les fibres d'agrumes ont une teneur en fibres alimentaires totales de 60 à 80 % en poids et une capacité de liaison de l'eau de 7 à 12 (p/p).

4. Composition selon les revendications précédentes, **caractérisée en ce que** les fibres d'agrumes peuvent être obtenues à partir d'agrumes choisis dans le groupe comprenant les oranges, les mandarines, les citrons verts, les citrons et les pamplemousses.

5. Composition selon les revendications précédentes, **caractérisée en ce que** le rapport en poids des fibres d'agrumes aux protéines est de 1:99 à 99:1, de préférence, de 5:95 à 90:10, de manière davantage préférée, de 10:90 à 30:70.

6. Composition selon les revendications précédentes, **caractérisée en ce que** la composition comprend en outre des hydrocolloïdes.

7. Composition liquide comprenant une composition sèche selon l'une quelconque des revendications 2 à 6 et un liquide comestible.

8. Composition liquide selon la revendication 7, **caractérisée en ce que** le liquide comestible est l'eau, des liquides à base d'eau, des liquides miscibles dans l'eau et/ou leurs mélanges.

9. Emulsion de viande comprenant une composition sèche selon l'une quelconque des revendications 2 à 6, des matières grasses et de l'eau, en un rapport en poids allant jusqu'à 1:7:7, de préférence de 1:4:4 4 à 1:7:7, de manière davantage préférée, de 1:5:5 de composition sèche : matières grasses : eau.

10. Utilisation de fibres d'agrumes pour augmenter la fonctionnalité de la farine de protéines de soja en termes de propriétés émulsifiantes et/ou de capacité de liaison à l'eau.

11. Utilisation selon la revendication 10, dans laquelle les fibres d'agrumes sont séchées.

12. Utilisation selon la revendication 10 ou 11, **caractérisée en ce que** ladite fonctionnalité est accrue dans la viande transformée.

13. Viande transformée, comprenant des ingrédients comestibles et une composition selon l'une quelconque des revendications 2 à 6, ou une émulsion de viande selon la revendication 9.

14. Procédé de préparation de viande transformée et ledit procédé comprenant les étapes suivantes :

   a) addition à la viande de la composition sèche selon l'une quelconque des revendications 2 à 6 dans de l'eau, ou en prenant la composition liquide selon la revendication 7 ou 8,
   b) addition de matières grasses,
   c) éventuellement, addition de sel,
   d) éventuellement, addition d'autres ingrédients comestibles,
   e) mélange,
   f) éventuellement, mise en boyaux de la viande transformée.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004045301 A
- US 6039952 A
- US 20010033856 A
- US 4865863 A
- WO 2006033697 A